# EUROPÄISCHE PATENTANMELDUNG

(11) **EP 2 395 816 A1**
(43) Veröffentlichungstag der Anmeldung: **14.12.2011**
(21) Anmeldenummer: 11161729.6
(22) Anmeldetag: 08.04.2011
(51) Int. Cl.: H05B 37/02, H05B 33/08, F21S 8/00

(54) **Beleuchtungsvorrichtung und Verfahren zur Steuerung einer Beleuchtungsvorrichtung**

(30) Priorität: 10.04.2010 DE 102010014609
(71) Anmelder: Brumberg Leuchten GmbH & Co., 58846 Sundern-Hellefeld (DE)
(72) Erfinder: Kuipers, Ulrich, Prof. Dr.-Ing., 57462 Olpe (DE)
(74) Vertreter: Manske, Jörg

(57) **Zusammenfassung**

Die vorliegende Erfindung betrifft eine Beleuchtungsvorrichtung (1) mit mindestens einer Leuchte (2), die eine Anzahl von Leuchtdioden (4a, 4b, 4c, 4d) umfasst und mit einer Steuerungseinrichtung (5), mittels derer die Leuchtdioden (4a, 4b, 4c, 4d) der mindestens einen Leuchte (2), vorzugsweise über eine Pulsweitenmodulation, ansteuerbar sind, wobei die Steuerungseinrichtung (5) einen Mikrocontroller, in dem mindestens eine leuchtenspezifische Hypertextseite, die insbesondere mindestens ein Programmskript umfassen kann, abrufbar gespeichert ist, über die die Leuchtdioden (4a, 4b, 4c, 4d) der mindestens einen Leuchte (2) durch Benutzereingaben parametriert und/oder gesteuert werden kann/können, und mindestens eine Datennetzschnittstelle, vorzugsweise eine drahtgebundene LAN- oder drahtlose WLAN-Schnittstelle, umfasst, die an die Steuerungseinrichtung (5) angeschlossen ist und so ausgebildet ist, dass die Beleuchtungsvorrichtung (1) mit einem Datennetz verbindbar ist, so dass eine Mehrzahl von Lichtfunktionen der Beleuchtungsvorrichtung (1) über ein in das Datennetz einbindbares Bediengerät, in dem ein Webbrowser ausführbar gespeichert ist, der die mindestens eine leuchtenspezifische Hypertextseite abrufen kann und mittels dessen Benutzereingaben zur Steuerung und/oder Parametrisierung der Leuchtdioden (4a, 4b, 4c, 4d) der mindestens einen Leuchte (2) vorgenommen werden können und über das Datennetz zur Steuerungseinrichtung (5) übertragen werden, gesteuert und/oder parametrisiert werden können. Darüber hinaus betrifft die Erfindung ein Verfahren zur Steuerung einer Beleuchtungsvorrichtung.

## Beschreibung

Die vorliegende Erfindung betrifft eine Beleuchtungsvorrichtung mit mindestens einer Leuchte, die eine Anzahl von Leuchtdioden umfasst, und mit einer Steuerungseinrichtung, mittels derer die Leuchtdioden der mindestens einen Leuchte, vorzugsweise über eine Pulsweitenmodulation, ansteuerbar sind. Darüber hinaus betrifft die vorliegende Erfindung ein Verfahren zur Steuerung einer Beleuchtungsvorrichtung.

Beleuchtungsvorrichtungen der eingangs genannten Art sowie Verfahren zur Steuerung derartiger Beleuchtungsvorrichtungen sind aus dem Stand der Technik in unterschiedlichen Ausführungsformen bekannt. Beispielsweise offenbart die deutsche Patentanmeldung DE 102 04 908.4 ein Verfahren und eine Vorrichtung zur Realisierung von LED-Leuchten mit Farb- und/oder Helligkeitseinstellung sowie das dazugehörige, speziell darauf abgestimmte Bedienelement. Die DE 10 2007 057 404 A1 offenbart ein weiteres Beispiel einer Beleuchtungsvorrichtung.

Die Lichtsteuerung von Beleuchtungsvorrichtungen, die als LED-Straßenleuchten dienen, erfolgt vorzugsweise über Rundsteueranlagen. Fernsteuerbare Beleuchtungsvorrichtungen mit LED-Leuchten für Innenraumbereiche werden vorzugsweise über Funkfernbedienungen, Infrarotfernbedienungen, Installationsbussysteme nach dem EIB-Standard (EIB = Europäischer Installationsbus nach EN 50090, in der aktuellen Version als KNX-Standard auch nach ISO/IEC 14543-3) oder LON ("Local Operating Network") oder über bekannte lichttechnische Bussysteme wie DALI ("Digital Addressable Lighting Interface") und DMX gesteuert.

Die aus dem Stand der Technik bekannten Beleuchtungsvorrichtungen, bei denen die Lichtsteuerung über Fernbedienungen, Rundsteueranlagen, Installationsbussysteme, lichttechnische Bussysteme oder dergleichen erfolgt, erfordern stets spezielle Bediengeräte, die eigens für diese Anwendungen entwickelt und hergestellt werden müssen. Entsprechend teuer sind derartige Beleuchtungsvorrichtungen in ihrer Herstellung. Ein weiteres Problem stellen häufig Verschmutzungen und Degradationen der Leuchtdioden und/oder Verschmutzungen transparenter Leuchtenabdeckungen dar, die den Betrieb der Beleuchtungsvorrichtung entscheidend beeinträchtigen können.

Der vorliegenden Erfindung liegt die Aufgabe zugrunde, eine Beleuchtungsvorrichtung der eingangs genannten Art sowie ein Verfahren zur Steuerung einer derartigen Beleuchtungsvorrichtung zur Verfügung zu stellen, die ein komfortables Steuern, insbesondere Dimmen, Schalten, Einstellen der Lichtspektren, Lichtfarben, Farbtemperaturen und Lichtintensitäten, ermöglichen.

Diese Aufgabe wird hinsichtlich der Beleuchtungsvorrichtung durch eine Beleuchtungsvorrichtung der eingangs genannten Art mit den Merkmalen des kennzeichnenden Teils des Anspruchs 1 gelöst. Hinsichtlich des Verfahrens wird die der vorliegenden Erfindung zu Grunde liegende Aufgabe durch ein Verfahren mit den Merkmalen des kennzeichnenden Teils des Anspruchs 8 gelöst. Die Unteransprüche betreffen vorteilhafte Weiterbildungen der Erfindung.

Eine erfindungsgemäße Beleuchtungsvorrichtung zeichnet sich dadurch aus, dass die Steuerungseinrichtung einen Mikrocontroller, in dem mindestens eine leuchtenspezifische Hypertextseite, die insbesondere mindestens ein Programmskript umfassen kann, abrufbar gespeichert ist, über die die Leuchtdioden der mindestens einen Leuchte durch Benutzereingaben parametriert und/oder gesteuert werden kann/können, und mindestens eine Datennetzschnittstelle, vorzugsweise eine drahtgebundene LAN- oder drahtlose WLAN-Schnittstelle, umfasst, die so ausgebildet ist, dass die Beleuchtungsvorrichtung mit einem Datennetz verbindbar ist, so dass eine Mehrzahl von Lichtfunktionen der Beleuchtungsvorrichtung über ein in das Datennetz einbindbares Bediengerät, in dem ein Webbrowser ausführbar gespeichert ist, der die mindestens eine leuchtenspezifische Hypertextseite abrufen kann und mittels dessen Benutzereingaben zur Steuerung und/oder Parametrisierung der Leuchtdioden der mindestens einen Leuchte vorgenommen werden können und über das Datennetz zur Steuerungseinrichtung übertragen werden können, gesteuert und/oder parametrisiert werden können. Ein Vorteil der erfindungsgemäßen Lösung besteht darin, dass der Betrieb der Beleuchtungsvorrichtung einschließlich der Auswahl und Parametrisierung der Lichtfunktionen ohne spezielle Fernsteuerungen oder Bediengeräte gesteuert werden kann. Dadurch, dass die Beleuchtungsvorrichtung eine Datennetzanschlussschnittstelle, vorzugsweise eine LAN- und/oder WLAN-Anschlussschnittstelle aufweist, kann die Beleuchtungsvorrichtung auf einfache Weise und mit geringem Aufwand in ein vorhandenes drahtgebundenes und/oder drahtloses Netzwerk eingebunden werden. Die Beleuchtungsvorrichtung umfasst vorteilhaft einen Webserver mit mindestens einer, mittels eines herkömmlichen, in einem Bediengerät ausführbar gespeicherten Webbrowers darstellbaren Hypertextseite, in die optional ein ausführbares Programmskript eingebunden sein kann. Die mindestens eine Hypertextseite und/oder das mindestens eine Programmskript sind so ausgeführt, dass Lichtfunktionen der Beleuchtungsvorrichtung, insbesondere das Dimmen, Schalten, Einstellen von Lichtspektren, Lichtfarben, Farbtemperaturen und Lichtintensitäten der Leuchte und/oder einzelner Leuchtdioden und/oder Gruppen von Leuchtdioden von einem Benutzer gewählt, gesteuert und parametrisiert werden können. Die Bedienung kann dabei in vorteilhafter Weise mit Hilfe herkömmlicher, in das Datennetz eingebundener Bediengeräte wie Computer, Notebooks, Mobiltelefone, PDAs oder dergleichen über einen beliebigen in diesen Bediengeräten ausführbar gespeicherten Webbrowser erfolgen. Die mindestens eine Leuchte der Beleuchtungseinrichtung kann zusätzlich auch über vorhandene Lichtschalter, Rundsteueranlagen, Bussysteme oder dergleichen ein- und ausgeschaltet werden, wobei beim Ausschalten vorteilhaft die letzten Einstellinformationen gespeichert werden und diese beim erneuten Einschalten aufgerufen werden. Mit anderen Worten ermöglicht die erfindungsgemäße Beleuchtungsvorrichtung in vorteilhafter Weise eine browserbasierte und damit hardware- und softwareunabhängige Steuerung und Bedienung der Lichtfunktionen der Beleuchtungsvorrichtung.

In einer besonders vorteilhaften Ausführungsform ist vorgesehen, dass die Beleuchtungsvorrichtung eine Mehrzahl von Leuchten aufweist, die jeweils eine Anzahl von Leuchtdioden umfassen, wobei die Leuchten miteinander in Kommunikationsverbindung stehen. Bei einer Kommunikation zu den Leuchten und/oder zwischen den Leuchten der Beleuchtungsvorrichtung können beispielsweise Dimm-, Lichtfarben-, Lichtspektren-, Farbtemperatur-, Lichtintensitätsinformationen und Leuchtenstatusinformationen übertragen werden.

Vorzugsweise können zumindest einige der Leuchtdioden Licht in unterschiedlichen spektralen Wellenlängenbereichen emittieren, so dass in vorteilhafter Weise eine Farblichtsteuerung möglich ist.

In einer vorteilhaften Ausführungsform kann jede der Leuchten so ausgebildet sein, dass sie einen regelbaren Weißlichtbereich zwischen 2000 und 10000 K aufweist.

In einer besonders vorteilhaften Ausführungsform ist vorgesehen, dass die Steuerungseinrichtung und jede der Leuchten so ausgebildet sind, dass die Beleuchtungsvorrichtung Licht über einen durch die eingesetzten Leuchtdioden vorgegebenen RGBW-Farbraum emittieren kann. Dadurch wird eine effiziente Farblichtsteuerung ermöglicht. Anstelle von heute üblichen Farblichtsteuerungen über rote, grüne und blaue Leuchtdioden können bei der hier beschriebenen Beleuchtungsvorrichtung zum Beispiel über rote, grüne, blaue und weiße Leuchtdioden bei gleichen Lichtfarben, zum Beispiel weißes Licht bei unterschiedlichen Farbtemperaturen (entlang des Planckschen Kurvenzuges), unterschiedliche Lichtspektren eingestellt oder auch circadiane Lichtsteuerungen mit einstellbaren Blauanteilen ermöglicht werden. In einer besonders vorteilhaften Ausführungsform ist vorgesehen, dass die Leuchtdioden RGBW-Multichip-Leuchtdioden sind. Anstelle von RGBW-Multichip-Leuchtdioden können alternativ auch kaltweiße, warmweiße und amberfarbige Leuchtdioden oder andere Farbkombinationen eingesetzt werden. Insbesondere können auch Kombinationen von RGB-Multichip-Leuchtdioden und weißen Leuchtdioden oder Kombinationen von weißen und verschiedenen farbigen Leuchtdioden verwendet werden.

In einer besonders bevorzugten Ausführungsform wird vorgeschlagen, dass zumindest eine der Leuchten ein lichtsensitives Sensormittel umfasst, das an die Steuerungseinrichtung angeschlossen ist und für eine Erfassung der Beleuchtungsstärke bei eingeschalteten und/oder ausgeschalteten Leuchtdioden eingerichtet ist. Das lichtsensitive Sensormittel kann vorteilhaft eine Photodiode sein. Alternativ ist es auch möglich, das lichtsensitive Sensormittel dadurch zu realisieren, dass zumindest eine der Leuchtdioden, vorzugsweise eine Licht im roten Wellenlängenbereich emittierende Leuchtdiode, kurzzeitig in Sperrrichtung geschaltet wird und so als Sensormittel genutzt werden kann. Bei der letztgenannten Ausgestaltungsmöglichkeit ist somit vorteilhaft kein separates Sensormittel zur Erfassung der Beleuchtungsstärke erforderlich. Das lichtsensitive Sensormittel ermöglicht in vorteilhafter Weise eine tageslichtabhängige Regelung der Leuchtfunktionen der mindestens einen Leuchte der Beleuchtungsvorrichtung. So können zum Beispiel bei einer Beleuchtungsvorrichtung mit einer Mehrzahl von Leuchten diejenigen Leuchten in Fensternähe eines Raums weniger Licht emittieren als diejenigen Leuchten, die in dunkleren Raumbereichen angeordnet sind. Eine umgebungslichtabhängige Lichtsteuerung über ein oder mehrere lichtsensitive Sensormittel bedingt ein hohes Energieeinsparungspotential. Für eine Tageslichtsteuerung eignet sich vorteilhaft eine Leuchtdiode, die Licht im roten Wellenlängenbereich emittieren kann und - kurzzeitig in Sperrrichtung geschaltet - als lichtsensitives Sensormittel genutzt werden kann. Bei weißen, blauen oder grünen Leuchtdioden ist das Empfangsspektrum zu kürzeren Wellenlängen verschoben, so dass sie weniger gut für eine Erfassung des Umgebungslichts geeignet sind. Bei RGBW-Leuchten mit RGBW-Leuchtdioden sollte vorzugsweise (mindestens) eine der im roten Spektralbereich emittierenden Leuchtdioden als lichtsensitives Sensormittel genutzt werden. Mit Hilfe einer grünen Leuchtdiode, die - kurzzeitig in Sperrrichtung geschaltet - ebenfalls als lichtsensitives Sensormittel genutzt werden kann, kann gegebenenfalls zusätzlich der Lichtanteil für eine circadiane Lichtsteuerung gemessen werden. Die Messung des Lichtstroms bei jeweils ausgeschalteten, als lichtsensitive Sensormittel arbeitenden Leuchtdioden kann dadurch erfolgen, dass die Leuchtdichte im Abstrahlbereich der Leuchtdioden (über dieselbe Optik) beziehungsweise der dazu proportionale Fotostrom gemessen wird.

Zusätzlich kann im Beleuchtungsbetrieb der Leuchtdioden die temperaturabhängige Durchlassspannung der Leuchtdioden gemessen werden und so ein Übertemperaturschutz realisiert werden.

Das lichtsensitive Sensormittel kann vorteilhaft als Verschmutzungs-und/oder Degradationssensor dienen, mittels dessen während des Betriebs die Lichtstärke der Leuchtdioden und/oder die Verschmutzung einer optional vorhandenen Abdeckscheibe der Leuchte gemessen und über eine Nachregelung des Betriebsstroms (LED-Stroms) kompensiert werden kann. Die Leistungsaufnahme orientiert sich also immer am aktuellen Bedarf. Zudem ist über die Sensorsteuerung neben der Degradationskompensation und der Verschmutzungskompensation auch eine Überwachung benachbarter Leuchtdioden, Gruppen von Leuchtdioden oder Leuchten möglich.

Insbesondere kann während des kurzzeitigen Einschaltens der vorzugsweise über eine Pulsweitenmodulation angesteuerten Leuchtdioden über das integrierte Sensormittel die Verschmutzung der Leuchte und/oder die Degradation der Leuchtdioden und/oder die Verschmutzung einer Abdeckscheibe gemessen werden. Des Weiteren besteht die Möglichkeit, dass bei kurzzeitig ausgeschalteten, vorzugsweise über eine Pulsweitenmodulation angesteuerten Leuchtdioden über das integrierte Sensormittel die Umgebungshelligkeit gemessen wird und während des kurzzeitigen Einschaltens der Leuchtdioden über das integrierte Sensormittel die Verschmutzung der Leuchte und/oder die Degradation der Leuchtdioden und/oder die Verschmutzung einer Abdeckscheibe gemessen wird.

Zum Ausgleich des Lichtstärkeverlusts (insbesondere durch Alterung) werden Leuchtdioden, ebenso wie konventionelle Leuchtmittel, mit einer höheren Leistung beaufschlagt, so dass nach der vorgegebenen Betriebsdauer noch das Sollbeleuchtungsniveau eingehalten wird. Das lichtsensitive Sensormittel kann bei ausgeschalteten Leuchtdioden darüber hinaus auch als Beleuchtungsstärke- und/oder Leuchtdichtesensor für das Umgebungslicht genutzt werden. Dadurch wird zum Beispiel auch eine automatisierte, umgebungslichtabhängige Steuerung der Lichtfunktionen der Beleuchtungsvorrichtung mittels der Steuerungseinrichtung ermöglicht. Ferner ist es möglich, aus der zeitlichen Änderung des Ausgangssignals des Sensormittels die Anwesenheit von Personen in der Nähe der Beleuchtungsvorrichtung zu erfassen (Bewegungsdetektion), so dass in vorteilhafter Weise auf ein separates Bewegungssensormittel verzichtet werden kann.

Eine parametrisierbare, circadiane Lichtsteuerung, die gemäß einer vorteilhaften Ausführungsform mittels der Steuerungseinrichtung realisiert werden kann, ermöglicht bei einer Ausführung der Leuchten als Innenraumleuchten eine tageszeitabhängige Veränderung des Lichtspektrums, vorzugsweise entsprechend des auf der Erde empfangenen Sonnenlichtspektrums an einem schönen Sonnentag. Aktuelle wissenschaftliche Erkenntnisse erklären den direkten Einfluss des Lichtspektrums auf die menschliche Hormonsteuerung. Demnach bewirken neu entdeckte Photosensoren auf der Netzhaut, die retinalen Ganglienzellen, nicht bildgebende Effekte, insbesondere die Steuerung der Zirbeldrüse (Epiphyse) und der Hirnanhangdrüse (Hypohyse) im Gehirn und darüber die Sekretion wichtiger Hormone wie Melatonin, Serotonin und Cortisol. Mit Hilfe der Beleuchtungsvorrichtung können sowohl die Lichtstärke, als auch die Lichtfarbe und das Lichtspektrum (gegebenenfalls auch bei gleicher Lichtfarbe) der Leuchten eingestellt werden. Eine dem spektralen Tageslichtverlauf angepasste Beleuchtung bewirkt eine positive Beeinflussung der Hormone und eine Erhöhung des Wohlbefindens, der Leistungsfähigkeit und der Gesundheit und ist daher besonders vorteilhaft.

Wenn die Beleuchtungsvorrichtung zum Beispiel eine Straßenleuchte ist, kann das emittierte Licht, vorzugsweise die horizontale Beleuchtungsstärke und/oder die Leuchtdichte, mit einem geeigneten Messfahrzeug auf der Straße gemessen werden und während der Messungen über die integrierte WLAN- oder LAN-Schnittstelle über ein Intranet, eine Ad-hoc-WLAN-Verbindung oder das Internet auf normativ vorgegebene Werte eingestellt werden.

Mit den hier vorgestellten zusätzlichen Funktionalitäten von LED-Leuchten können zum Beispiel Straßenleuchten zu einem multifunktionalen Beleuchtungssystem weitergebildet werden. Über in die Leuchten integrierte WLAN-Zugangspunkte und gegebenenfalls damit realisierbare Ad-hoc-WLAN-Netze (häufig auch als "Mesh-WLAN-Netze" bezeichnet) kann eine Energie- und Wasserbilanzierung benachbarter Häuser und Wohnungen und ein Energiemanagement vorzugsweise elektrischer Verbraucher über das Internet ermöglicht werden. In die Straßenleuchten integrierte Elektrotankstellen mit einem im beziehungsweise über das Internet hinterlegten Abrechnungssystem dienen zur Förderung der Elektromobilität. Zudem wird eine Breitbandkommunikation der Anwohner über die mit den Straßenleuchten realisierten Ad-hoc-WLAN-Netze (Mesh-WLAN-Netze) ermöglicht.

In einer weiteren vorteilhaften Ausführungsform wird vorgeschlagen, dass zum Beispiel die Dimm- und Farb- und Lichtspektreninformationen zwischen benachbarten Leuchten über das sichtbare Licht der Leuchten übertragen werden. Ein Vorteil dieses Verfahrens ist dessen äußerst kostengünstige Realisierbarkeit ohne zusätzliche Bauelemente. Die Leuchtdioden können dabei sowohl als Sender als auch (kurzzeitig in Sperrrichtung geschaltet) als Empfänger genutzt werden.

Die hier beschriebene Beleuchtungsvorrichtung ermöglicht es zum Beispiel auch, dass über ein beispielsweise mit einem Smartphone gemachtes Foto automatisiert eine Lichtfarbe ausgewählt und per WLAN an die Leuchten übertragen wird.

Ein erfindungsgemäßes Verfahren zur Steuerung einer Beleuchtungsvorrichtung, die nach einem der Ansprüche 1 bis 7 ausgeführt ist, zeichnet sich dadurch aus dass
- die Beleuchtungsvorrichtung in ein drahtgebundenes oder drahtloses Datennetz eingebunden wird und mindestens ein Bediengerät, in dem ein Webbrowser ausführbar gespeichert ist, in das Datennetz eingebunden wird,
- mittels des Webbrowsers eine in dem Microcontroller der Steuerungseinrichtung gespeicherte leuchtenspezifische Hypertextseite, die ein ausführbares Programmskript umfassen kann, aufgerufen wird und eine Mehrzahl von Lichtfunktionen der Beleuchtungsvorrichtung durch Benutzereingaben, die über den Webbrowser vorgenommen werden und über das Datennetz zur Steuerungseinrichtung übertragen werden, parametrisiert und/oder gesteuert werden. Das erfindungsgemäße Verfahren ermöglicht damit in vorteilhafter Weise eine browserbasierte und damit hardware- und softwareunabhängige Steuerung und Bedienung der Lichtfunktionen der Beleuchtungsvorrichtung.

In einer bevorzugten Ausführungsform besteht die Möglichkeit, dass mittels einer zusätzlichen Zeitinformation, die aus dem Datennetz, dem Internet oder einem anderen mit der Steuerungseinrichtung in Kommunikationsverbindung bringbaren Netz empfangen wird oder über eine in die Beleuchtungsvorrichtung integrierte Uhr und/oder aus über einen oder mehrere Tage mit dem mindestens einen Sensormittel erfassten Lichtstärke- oder Leuchtdichteinformationen eine circadiane Lichtsteuerung der Beleuchtungsvorrichtung, vorzugsweise mit Veränderungen des Lichtspektrums, erfolgt.

In einer vorteilhaften Ausführungsform kann vorgesehen sein, dass über eine Pulsung der Leuchtdioden und eine Messung des informationsbehafteten gepulsten Lichts benachbarter Leuchten, vorzugsweise mit dem mindestens einen Sensormittel eine Informationsübertragung, vorzugsweise zur digitalen Übertragung von Dimmeinstellungen und/oder zur Einstellung der Lichtfarben und/oder der Lichtspektren und/oder zur Übertragung von Leuchtenzustandsinformationen erfolgt.

Gemäß einer vorteilhaften Weiterbildung besteht die Möglichkeit, dass zur Ansteuerung einer Gruppe von Leuchten und/oder Leuchtdioden und/oder Gruppen von Leuchtdioden mittels LAN und/oder WLAN in einer der Leuchten zusätzlich ein oder mehrere Bussignale, vorzugsweise DMX-Signale, KNX-Signale oder DALI-Signale, Zigbee-Signale oder PWM-Signale zur Steuerung einer oder mehrerer weiterer Leuchten, Leuchtdioden und/oder Gruppen von Leuchtdioden über entsprechende Kommunikationsschnittstellen ausgegeben werden.

Es besteht in einer weiteren vorteilhaften Ausführungsform die Möglichkeit, dass eine Änderung einer, insbesondere über DMX-Signale, KNX-Signale, DALI-Signale, Internetsignale oder digitale oder analoge Schnittstellen oder Benutzereingaben, vorgegebenen Farbtemperatur über eine Veränderung der Ströme durch mindestens zwei verschiedenfarbige Leuchtdioden erfolgt.

In einer besonders vorteilhaften Ausführungsform kann vorgesehen sein, dass die Änderung einer, insbesondere über DMX-Signale, KNX-Signale, DALI-Signale, das Internet oder über digitale oder analoge Schnittstellen oder Benutzereingaben, vorgegebenen Farbtemperatur über eine Veränderung der Ströme durch vier oder mehr verschiedenfarbige Leuchtdioden erfolgt, wobei vorzugsweise die Lichtfarbe entlang des Planckschen Kurvenzugs verändert wird und über die Bestromung mindestens einer im blauen Wellenlängenbereich emittierenden Leuchtdiode eine circardine Lichtsteuerung über eine entsprechende Veränderung des Lichtspektrums bei optional gleicher Lichtfarbe erfolgt. Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen
- Fig. 1: eine schematisch stark vereinfachte Seitenansicht einer Beleuchtungsvorrichtung, die gemäß einem bevorzugten Ausführungsbeispiel der vorliegenden Erfindung ausgeführt ist;
- Fig. 2: eine schematisch stark vereinfachte Darstellung einer Beleuchtungsvorrichtung mit vier Leuchten.

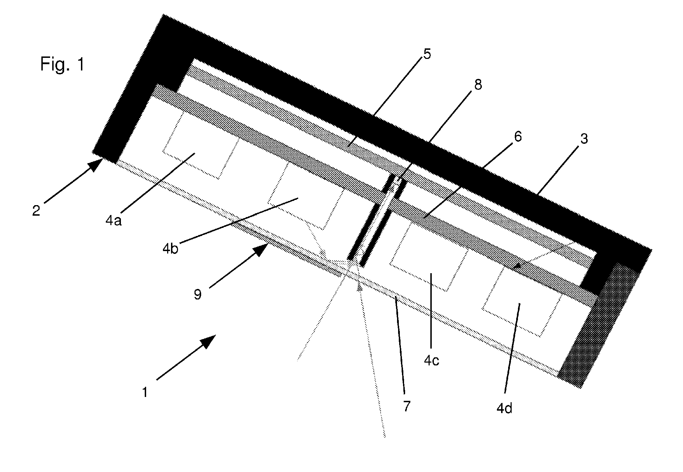

Zunächst wird auf Fig. 1 Bezug genommen, die den grundlegenden Aufbau einer Beleuchtungsvorrichtung 1 zeigt, die gemäß einem bevorzugten Ausführungsbeispiel der vorliegenden Erfindung ausgeführt ist. Die Beleuchtungsvorrichtung 1 umfasst in diesem Ausführungsbeispiel eine einzelne Leuchte 2 mit einem Gehäuse 3, innerhalb dessen mehrere Leuchtdioden 4a, 4b, 4c, 4d untergebracht sind. Die Leuchtdioden 4a, 4b, 4c, 4d, die zum Beispiel RGBW-Multichip-Leuchtdioden sein können, sind auf einem vorliegend im Wesentlichen plattenförmig ausgebildeten Kühlkörper 6 angeordnet, um die während des Betriebs der Leuchtdioden 4a, 4b, 4c, 4d erzeugte Wärme abführen zu können. Alternativ ist es auch möglich, dass eine der Leuchtdioden 4a, 4b, 4c, 4d Licht im roten spektralen Wellenlängenbereich, eine weitere Leuchtdiode 4a, 4b, 4c, 4d Licht im grünen spektralen Wellenlängenbereich, eine weitere Leuchtdiode 4a, 4b, 4c, 4d Licht im blauen spektralen Wellenlängenbereich und eine weitere Leuchtdiode 4a, 4b, 4c, 4d weißes Licht emittiert.

Ferner ist eine Steuerungseinrichtung 5 im Inneren des Gehäuses 3 der Leuchte 2 untergebracht, die so ausgebildet ist, dass sie den Betrieb der Leuchtdioden 4a, 4b, 4c, 4d steuern kann. Bei einer Farblichtsteuerung mittels der Steuerungseinrichtung 5 werden vorliegend nicht nur die Farben RGB (rot, grün, blau) miteinander gemischt, sondern es wird zudem ein Weißanteil hinzugemischt. Es besteht somit die Möglichkeit, mittels jeder der RGBW-Multichip-Leuchtdioden den gesamten RGB-Farbraum und die Plancksche-Kurve (Weißlichttöne mit Farbtemperaturen von 2.000 bis 10.000 Kelvin) abzubilden. Die Steuerungseinrichtung 5 kann - wie hier beschrieben - in die Leuchte 2 integriert sein. Alternativ ist es auch möglich, die Steuerungseinrichtung 5 als separate Baugruppe, insbesondere als separates, an die Leuchte 2 anschließbares Modul oder dergleichen auszuführen. Den Abschluss des Gehäuses 2 bildet eine zumindest teilweise lichtdurchlässige Abdeckscheibe 7, durch die das von den Leuchtdioden 4a, 4b, 4c, 4d während des Betriebs emittierte Licht in die Umgebung transmittiert werden kann. In die Abdeckscheibe 7 können vorteilhaft optische Linsen integriert sein. Die Steuerungseinrichtung 5 weist einen Mikrocontroller mit Speichermitteln auf, in denen mindestens eine leuchtenspezifische Hypertextseite, die mindestens ein Programmskript umfassen kann, abrufbar gespeichert ist, über die die Leuchtdioden 4a, 4b, 4c, 4d der mindestens einen Leuchte 2 parametriert und/oder gesteuert werden kann/können. Ferner umfasst die Steuerungseinrichtung 5 mindestens eine Datennetzschnittstelle, vorzugsweise eine drahtgebundene LAN-und/oder eine drahtlose WLAN-Schnittstelle, mittels derer die Beleuchtungsvorrichtung 1 drahtgebunden und/oder drahtlos an ein Datennetzwerk angeschlossen und darin eingebunden werden kann.

Die Bereitstellung eines Mikrocontrollers, dem eine Hypertextseite zugeordnet ist, ermöglicht es, dass die Beleuchtungsvorrichtung 1 , die eine oder mehrere der vorstehend beschriebenen Leuchten 2 umfassen kann, und deren Lichtfunktionen mittels eines Webbrowsers, der zum Beispiel in einem in das Datennetz eingebundenen Mobiltelefon, Notepad, Notebook, Computer oder dergleichen ausführbar gespeichert ist, parametriert und/oder gesteuert werden können. Damit wird eine hardware- und softwareunabhängige Steuerung und Bedienung ermöglicht, wobei die Leuchte(n) 2 der Beleuchtungsvorrichtung 1 weiterhin über herkömmliche Lichtschalter ein- und ausgeschaltet werden können. Insbesondere ermöglicht die hier vorgestellte Lösung ein komfortables, browserbasiertes Steuern, insbesondere Dimmen, Schalten, Einstellen der Lichtspektren, Lichtfarben, Farbtemperaturen und Lichtintensitäten der Beleuchtungsvorrichtung 1 mit einer oder mehreren Leuchten 2. Das Einstellen einiger Lichtfunktionen kann zum Beispiel über Schieberegler erfolgen.

Ferner umfasst die Beleuchtungsvorrichtung 1 ein lichtsensitives Sensormittel 8, das ebenfalls innerhalb des Gehäuses 2 untergebracht ist und an die Steuerungseinrichtung angeschlossen ist. Das lichtsensitive Sensormittel 8 ist für eine Erfassung der Beleuchtungsstärke bei eingeschalteten und/oder ausgeschalteten Leuchtdioden 4a, 4b, 4c, 4d eingerichtet. Das lichtsensitive Sensormittel kann vorteilhaft eine Photodiode sein. Alternativ ist es auch möglich, die Funktionalität des lichtsensitiven Sensormittels 8 dadurch zu realisieren, dass zumindest eine der Leuchtdioden 4a, 4b, 4c, 4d kurzzeitig in Sperrrichtung geschaltet wird und so als Sensormittel genutzt wird. Das lichtsensitive Sensormittel 8 ermöglicht in vorteilhafter Weise eine tageslichtabhängige Regelung der Leuchtfunktionen der mindestens einen Leuchte 2 der Beleuchtungsvorrichtung 1. So können zum Beispiel bei einer Beleuchtungsvorrichtung 1 mit einer Mehrzahl von Leuchten 2 diejenigen Leuchten 2 in Fensternähe eines Raums weniger Licht emittieren als Leuchten 2, die in dunkleren Raumbereichen angeordnet sind.

Sind die Leuchtdioden 4a, 4b, 4c, 4d der Leuchte 2 ausgeschaltet, kann mit demselben Sensormittel 8 die Umgebungsleuchtdichte und/oder Umgebungsbeleuchtungsstärke gemessen werden. Der Öffnungswinkel und der Empfindlichkeitsbereich des Sensormittels 8 werden vorzugsweise durch eine vorgeschaltete Optik vorgegeben. Aus der zeitlichen Änderung der gemessenen Leuchtdichte und/oder Beleuchtungsstärke kann auch eine Bewegungsdetektion erfolgen. Dadurch wird es zum Beispiel möglich, die Leuchte(n) 2 der Beleuchtungsvorrichtung 1 ohne zusätzliche Bewegungssensoren einzuschalten, wenn sich eine Person in der Nähe der Beleuchtungsvorrichtung 1 befindet.

Das lichtsensitive Sensormittel 8 kann vorteilhaft auch als Verschmutzungs- und/oder Degradationssensor dienen, mittels dessen während des Betriebs die Lichtstärke der Leuchtdioden 4a, 4b, 4c, 4d und/oder eine Verschmutzung 9 der Abdeckscheibe 7 der Leuchte 2 gemessen und über eine Nachregelung des Betriebsstroms (LED-Stroms) kompensiert werden kann. Zudem ist über die Sensorsteuerung neben der Degradationskompensation und der Verschmutzungskompensation auch eine Überwachung benachbarter Leuchtdioden 4a, 4b, 4c, 4d, Gruppen von Leuchtdioden 4a, 4b, 4c, 4d oder Leuchten 2 möglich. Die Degradation und Verschmutzung werden vorteilhaft bei zumindest kurzzeitig eingeschalteten Leuchtdioden 4a, 4b, 4c, 4d gemessen. Sowohl deren Lichtstärkedegradation als auch Verschmutzungen der Abdeckscheibe 7 erhöhen die mit dem Sensormittel 8 gemessene Beleuchtungsstärke.

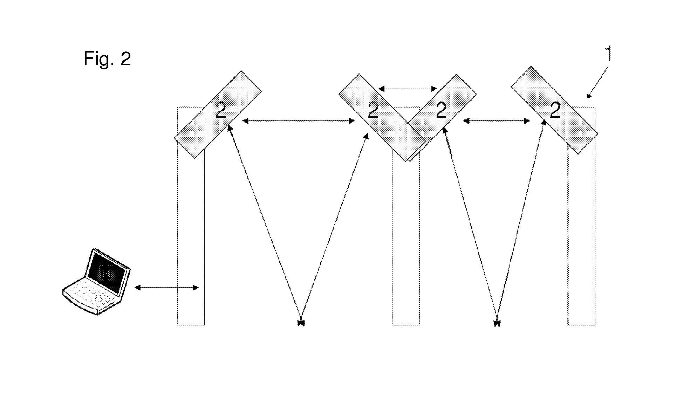

Unter Bezugnahme auf Fig. 2 ist dort eine Beleuchtungsvorrichtung 1 dargestellt, die insgesamt vier nach dem oben erläuterten Grundprinzip aufgebaute Leuchten 2 umfasst. Diese Leuchten 2 stehen miteinander in Kommunikationsverbindung. Zumindest eine der Leuchten 2 weist eine Steuerungseinrichtung 5 auf, mittels derer der Betrieb aller Leuchten 2 gesteuert werden kann. Zur Ansteuerung dieser Gruppe von Leuchten 2 mit LAN- oder WLAN-Steuerung können in einer der Leuchten 2 zusätzlich ein oder mehrere andere Bussignale, vorzugsweise DMX- oder DALI-Signale oder PWM-Signale zur Steuerung der übrigen Leuchten 2 mit entsprechenden Schnittstellen ausgegeben werden. Dieses Ansteuerungsprinzip ist grundsätzlich auch auf eine einzelne Leuchte 2 mit mehreren einzeln ansteuerbaren Leuchtdioden 4a, 4b, 4c, 4d und/oder Gruppen von Leuchtdioden anwendbar. Ein tragbarer Computer (Notebook) 10 mit einem Webbrowser ist hier beispielhaft für die Steuerung der Beleuchtungsvorrichtung 1 vorgesehen.

Neben der Steuerung der Leuchten 2 über WLAN, einer Steuerung von Gruppen von Leuchten 2 über WLAN und daraus abgeleitete PWM-Signale oder Installationsbussignale, DMX-Signale, DALI-Signale, KNX-Signale oder dergleichen kann eine Steuerung vorzugsweise über ein WLAN- oder LAN-Steuerungsmodul und eine drahtlose Zigbee-, Bluetooth- oder eine andere Funkkommunikationsverbindung zu (weiteren) Leuchten 2 vorgesehen sein.

Die Leuchten 2 können zum Beispiel auch aus mehreren gleichen Einzelmodulen mit als Kühlkörper ausgeführten Gehäusen 3 und asymmetrischen Lichtverteilungen bestehen, wobei insbesondere bei Straßenleuchten die Hauptachsen der Einzelmodule in Straßenrichtung ausgerichtet sind und entsprechend der Straßenbreite mehrere Einzelmodule um definierte Winkel gedreht angeordnet sind und zur Ausleuchtung der vollen Straßenbreite sowie der angrenzenden Geh- und Radwege genutzt werden können. In die Modulgehäuse können sehr gut wärmeleitende Winkelbleche eingebaut sein, die als Leuchtdiodenträger zur räumlichen Ausrichtung der einzelnen Leuchtdioden 4a, 4b, 4c, 4d und zur Wärmeableitung dienen.

Gemäß einer weiteren, hier nicht explizit dargestellten Ausführungsform können die Leuchten 2 der Beleuchtungsvorrichtung 1 derart aufgeteilt und angeordnet sein, dass ein nach unten gerichteter Lichtanteil zur direkten Beleuchtung der Umgebung dient und ein vorzugsweise andersfarbiger Lichtanteil über die Beleuchtung einer Decke die Lichtfarbe des Himmels nachbildet, wobei die Lichtfarbe und/oder das Lichtspektrum über den Tag verändert werden können/kann beziehungsweise nach dem Vorbild der Natur verändert werden/wird. In einer speziellen Ausführungsform kann die Deckenbeleuchtung über ein selbstleuchtendes Schienensystem mit integrierten zumindest blauen und warmweißen Leuchtdioden und die vorzugsweise direkte Beleuchtung über am Schienensystem anbringbare, nach unten abstrahlende Leuchten (so genannte Downlights) erfolgen.

## Patentansprüche

1. Beleuchtungsvorrichtung (1) mit mindestens einer Leuchte (2), die eine Anzahl von Leuchtdioden (4a, 4b, 4c, 4d) umfasst und mit einer Steuerungseinrichtung (5), mittels derer die Leuchtdioden (4a, 4b, 4c, 4d) der mindestens einen Leuchte (2), vorzugsweise über eine Pulsweitenmodulation, ansteuerbar sind, **dadurch gekennzeichnet, dass** die Steuerungseinrichtung (5) einen Mikrocontroller, in dem mindestens eine leuchtenspezifische Hypertextseite, die insbesondere mindestens ein Programmskript umfassen kann, abrufbar gespeichert ist, über die die Leuchtdioden (4a, 4b, 4c, 4d) der mindestens einen Leuchte (2) durch Benutzereingaben parametriert und/oder gesteuert werden kann/können, und mindestens eine Datennetzschnittstelle, vorzugsweise eine drahtgebundene LAN- oder drahtlose WLAN-Schnittstelle, umfasst, die an die Steuerungseinrichtung (5) angeschlossen ist und so ausgebildet ist, dass die Beleuchtungsvorrichtung (1) mit einem Datennetz verbindbar ist, so dass eine Mehrzahl von Lichtfunktionen der Beleuchtungsvorrichtung (1) über ein in das Datennetz einbindbares Bediengerät, in dem ein Webbrowser ausführbar gespeichert ist, der die mindestens eine leuchtenspezifische Hypertextseite abrufen kann und mittels dessen Benutzereingaben zur Steuerung und/oder Parametrisierung der Leuchtdioden (4a, 4b, 4c, 4d) der mindestens einen Leuchte (2) vorgenommen werden können und über das Datennetz zur Steuerungseinrichtung (5) übertragen werden, gesteuert und/oder parametrisiert werden können.

2. Beleuchtungsvorrichtung (1) nach Anspruch 1 , **dadurch gekennzeichnet, dass** die Beleuchtungsvorrichtung (1) eine Mehrzahl von Leuchten (2) aufweist, die jeweils eine Anzahl von Leuchtdioden (4a, 4b, 4c, 4d) umfassen, wobei die Leuchten (2) miteinander in Kommunikationsverbindung stehen.

3. Beleuchtungsvorrichtung (1) nach einem der Ansprüche 1 oder 2, **dadurch gekennzeichnet, dass** zumindest einige der Leuchtdioden (4a, 4b, 4c, 4d) Licht in unterschiedlichen spektralen Wellenlängenbereichen emittieren können.

4. Beleuchtungsvorrichtung (1) nach einem der Ansprüche 1 bis 3, **dadurch gekennzeichnet, dass** jede der Leuchten (2) so ausgebildet ist, dass sie einen regelbaren Weißlichtbereich zwischen 2000 und 10000 K aufweist.

5. Beleuchtungsvorrichtung (1) nach einem der Ansprüche 1 bis 4, **dadurch gekennzeichnet, dass** die Steuerungseinrichtung (5) und jede der Leuchten (2) so ausgebildet sind, dass die Beleuchtungsvorrichtung (1) Licht über den RGBW-Farbraum emittieren kann.

6. Beleuchtungsvorrichtung (1) nach einem der Ansprüche 1 bis 5, **dadurch gekennzeichnet, dass** zumindest einige der Leuchtdioden (4a, 4b, 4c, 4d) RGBW-Multichip-Leuchtdioden oder RGB-Multichip-Leuchtdioden und weiße Leuchtdioden oder weiße und verschiedene farbige Leuchtdioden sind.

7. Beleuchtungsvorrichtung (1) nach einem der Ansprüche 1 bis 6, **dadurch gekennzeichnet, dass** zumindest eine der Leuchten (2) ein lichtsensitives Sensormittel (8) umfasst, das an die Steuerungseinrichtung (5) angeschlossen ist und für eine Erfassung der Beleuchtungsstärke bei eingeschalteten und/oder ausgeschalteten Leuchtdioden (4a, 4b, 4c, 4d) eingerichtet ist.

8. Verfahren zur Steuerung einer Beleuchtungsvorrichtung (1), die nach einem der Ansprüche 1 bis 7 ausgeführt ist, **dadurch gekennzeichnet, dass**
- die Beleuchtungsvorrichtung (1) in ein drahtgebundenes oder drahtloses Datennetz eingebunden wird und mindestens ein Bediengerät, in dem ein Webbrowser ausführbar gespeichert ist, in das Datennetz eingebunden wird,
- mittels des Webbrowsers eine in dem Microcontroller der Steuerungseinrichtung (5) gespeicherte leuchtenspezifische Hypertextseite, die ein ausführbares Programmskript umfassen kann, aufgerufen wird und eine Mehrzahl von Lichtfunktionen der Beleuchtungsvorrichtung (1) durch Benutzereingaben, die über den Webbrowser vorgenommen werden und über das Datennetz zur Steuerungseinrichtung (5) übertragen werden, parametrisiert und/oder gesteuert werden.

9. Verfahren nach Anspruch 8, **dadurch gekennzeichnet, dass** mittels einer zusätzlichen Zeitinformation, die aus dem Datennetz, dem Internet oder einem anderen mit der Steuerungseinrichtung (5) in Kommunikationsverbindung bringbaren Netz empfangen wird oder über eine in die Beleuchtungsvorrichtung (1) integrierte Uhr und/oder aus über einen oder mehrere Tage mit dem mindestens einen Sensormittel (8) erfassten Lichtstärke- oder Leuchtdichteinformationen eine circadiane Lichtsteuerung der Beleuchtungsvorrichtung (1), vorzugsweise mit Veränderungen des Lichtspektrums, erfolgt.

10. Verfahren nach einem der Ansprüche 8 oder 9, **dadurch gekennzeichnet, dass** über eine Pulsung der Leuchtdioden (4a, 4b, 4c, 4d) und eine Messung des informationsbehafteten gepulsten Lichts benachbarter Leuchten (2), vorzugsweise mit dem mindestens einen Sensormittel (8) eine Informationsübertragung, vorzugsweise zur digitalen Übertragung von Dimmeinstellungen und/oder zur Einstellung der Lichtfarben und/oder der Lichtspektren und/oder zur Übertragung von Leuchtenzustandsinformationen erfolgt.

11. Verfahren nach einem der Ansprüche 8 bis 10, **dadurch gekennzeichnet, dass** zur Ansteuerung einer Gruppe von Leuchten (2) und/oder Leuchtdioden (4a, 4b, 4c, 4d) und/oder Gruppen von Leuchtdioden (4a, 4b, 4c, 4d) mittels LAN und/oder WLAN in einer der Leuchten (2) zusätzlich ein oder mehrere Bussignale, vorzugsweise DMX-Signale, KNX-Signale oder DALI-Signale, Zigbee-Signale oder PWM-Signale zur Steuerung einer oder mehrerer weiterer Leuchten (2), Leuchtdioden (4a, 4b, 4c, 4d) und/oder Gruppen von Leuchtdioden (4a, 4b, 4c, 4d) über entsprechende Kommunikationsschnittstellen ausgegeben werden.

12. Verfahren nach einem der Ansprüche 8 bis 1 1 , **dadurch gekennzeichnet, dass** eine Änderung einer, insbesondere über DMX-Signale, KNX-Signale, DALI-Signale, Internetsignale oder digitale oder analoge Schnittstellen oder Benutzereingaben, vorgegebenen Farbtemperatur über eine Veränderung der Ströme durch mindestens zwei verschiedenfarbige Leuchtdioden (4a, 4b, 4c, 4d) erfolgt.

13. Verfahren nach einem der Ansprüche 8 bis 12, **dadurch gekennzeichnet, dass** die Änderung einer, insbesondere über DMX-Signale, KNX-Signale, DALI-Signale, das Internet oder über digitale oder analoge Schnittstellen oder Benutzereingaben, vorgegebenen Farbtemperatur über eine Veränderung der Ströme durch vier oder mehr verschiedenfarbige Leuchtdioden (4a, 4b, 4c, 4d) erfolgt, wobei vorzugsweise die Lichtfarbe entlang des Planckschen Kurvenzugs verändert wird und über die Bestromung mindestens einer im blauen Wellenlängenbereich emittierenden Leuchtdiode eine circardine Lichtsteuerung über eine entsprechende Veränderung des Lichtspektrums bei optional gleicher Lichtfarbe erfolgt.
